# EUROPÄISCHE PATENTSCHRIFT

(11) **EP 2 027 441 B1**
(45) Veröffentlichungstag und Bekanntmachung des Hinweises auf die Patenterteilung: **18.05.2011**
(21) Anmeldenummer: 07723243.7
(22) Anmeldetag: 13.03.2007
(51) Int. Cl.: G01F 23/22, G21C 17/022

(54) **VORRICHTUNG ZUR FÜLLSTANDSMESSUNG**
LIQUID MEASUREMENT DEVICE
DISPOSITIF DE MESURE DE NIVEAU

(30) Priorität: 29.05.2006 DE 102006025220
(43) Veröffentlichungstag der Anmeldung: 25.02.2009
(73) Patentinhaber: Areva NP GmbH, 91050 Erlangen (DE)
(72) Erfinder: KAERCHER, Sacha, 63067 Offenbach (DE); VOGT, Wolfgang, 63796 Kahl (DE); HARFST, Wilfried, 55130 Mainz (DE)
(74) Vertreter: Hafner-Tergau-Walkenhorst
(86) Internationale Anmeldenummer: PCT/EP2007/002233
(87) Internationale Veröffentlichungsnummer: WO 2007/137639

(56) Entgegenhaltungen:
- DE-A1- 19 714 534
- US-A- 4 449 403
- US-A- 4 785 665
- US-A- 5 600 528

## Beschreibung

Die Erfindung betrifft eine auf der Verwendung von beheizten und unbeheizten Thermoelementen als Signalgeber beruhende Vorrichtung zur Füllstandsmessung in einem Flüssigkeitsbehälter, insbesondere in einem Reaktorbehälter einer kerntechnischen Anlage.

Messvorrichtungen oder Füllstandssonden, bei denen anhand der von einem beheizten Thermoelement erzeugten Thermospannung auf die Füllstandshöhe in einem Flüssigkeitsbehälter geschlossen wird, werden insbesondere in Kernkraftwerken eingesetzt, da sie gegenüber auf anderen Messprinzipien beruhenden Messvorrichtungen vergleichsweise unempfindlich gegen radioaktive Strahlung sind und daher auch bei einem Störfall mit gegebenenfalls erhöhten Strahlungswerten zuverlässig arbeiten können. Derartige Messvorrichtungen finden insbesondere im Reaktordruckbehälter eines Druckwasserreaktors Anwendung, um dort die Pegelhöhe der durch den Primärkreislauf der Kraftwerksanlage strömenden Kühlflüssigkeit oberhalb der Brennelemente zu überwachen.

Das Messprinzip nutzt die unterschiedlichen Wärmeübergangscharakteristiken aus, die beim Übergang der Wärme von einem Heizelement auf ein das Heizelement umgebende flüssiges Kühlmittel einerseits und auf ein gas- oder dampfförmiges Medium andererseits auftreten. Solange das Heizelement von flüssigem Kühlmedium umgeben ist, wird die von ihm erzeugte Wärme rasch abgeführt, so dass selbst in seiner unmittelbaren Umgebung die Temperatur nur unwesentlich oberhalb derjenigen Umgebungstemperatur liegt, die sich im unbeheizten Falle einstellen würde. Tritt nun beispielsweise während des regulären Reaktorbetriebs oder auch bei einem Reaktorstörfall die Situation ein, dass betriebsbedingt oder aufgrund eines Druckverlustes im Primärkreislauf der Flüssigkeitspegel im Reaktordruckbehälter unter die Höhe des Heizelementes sinkt, dieses mithin von dampfförmigem Kühlmittel umgeben ist, so verschlechtern sich die Wärmeübergangseigenschaften. Dies hat zur Folge, dass die Temperatur in der Umgebung des Heizelementes ansteigt, was sich durch ein benachbart zum Heizelement angebrachtes Thermometer oder einen Temperaturmessfühler nachweisen läßt. Aufgrund ihrer zuverlässigen und robusten Betriebsweise kommen als Temperaturmessfühler in der Regel Thermoelemente zum Einsatz, die eine im Wesentlichen der Temperatur proportionale Thermospannung liefern.

Üblicherweise ist eine Mehrzahl von beheizten Thermoelementen in zumeist regelmäßigen Abständen voneinander an einem stab- oder röhrenförmigen Träger oder an einem länglichen Messrohr angeordnet, das in die hinsichtlich ihres Pegelstandes zu überwachende Flüssigkeit eintaucht, und in dessen Inneren auch die zur Stromversorgung der Heizelemente und die zur Signalübermittlung an eine externe Auswerteeinheit notwendigen Versorgungs- und Signalleitungen geführt sind. Die in verschiedenen Höhen angeordneten Sensoren oder Messpositionen ermöglichen somit eine digitale, räumlich diskrete Anzeige der Füllstandshöhe im Behälter, wobei die (örtliche) Auflösung von der Anzahl der Thermosensoren pro Höhenabschnitt abhängt. Eine Messvorrichtung dieser Art ist beispielsweise aus der RU 2153712 C1 bekannt. Neben den als primären Signalgebern wirksamen beheizten Thermoelementen ist dabei auch noch eine Mehrzahl von unbeheizten Thermoelementen im Inneren des Messrohres angeordnet, die ein dem jeweiligen Primärsignal zugeordnetes Referenzsignal liefern. Auf diese Weise läßt sich bei der Auswertung der Temperaturinformationen und der daraus abgeleiteten Ermittlung der Füllstandshöhe auch eine zeitliche Variation der Flüssigkeits- oder Umgebungstemperatur berücksichtigen. Ohne eine derartige Maßnahme könnte beispielsweise ein Anstieg oder eine Senkung der Flüssigkeitstemperatur fälschlicherweise als Variation der Füllhöhe gedeutet oder eine tatsächliche Veränderung der Füllhöhe durch eine gleichzeitige Temperaturänderung der Flüssigkeit "verdeckt" werden.

Bei der Messvorrichtung gemäß der RU 2153712 C1 sind die unbeheizten Thermoelemente jeweils höhenversetzt gegenüber den beheizten Thermoelementen innerhalb des Messrohres angeordnet, so dass sie vor dem Einfluß der auf die beheizten Thermoelemente einwirkenden Heizelemente oder Heizzonen zumindest einigermaßen geschützt sind. Thermische Wechselwirkungen, das heißt eine unerwünschte Beheizung der an sich unbeheizten Thermoelemente, sind aber trotzdem nicht ausgeschlossen und können die Messergebnisse unter Umständen verfälschen. Andererseits liegen die einander zugeordneten beheizten und unbeheizten Thermoelemente auf unterschiedlichen Höhenniveaus. Dies kann insbesondere dann zu ungenauen Messergebnissen und Fehlinterpretationen führen, wenn - was in der Praxis häufig vorkommt - ein nicht zu vernachlässigender Temperaturgradient über die Höhe der die Messvorrichtung umgebenden Flüssigkeit besteht. Zudem ist bei einer derartigen Ausgestaltung der Messvorrichtung die Anzahl möglicher Messpositionen und somit die Höhenauflösung der Füllstandsanzeige aufgrund der geometrischen Vorgaben des Sondengehäuses bzw. des Messrohrgehäuses stark eingeschränkt. Für eine gegebene Höhe ist außerdem nur eine Messeinheit bzw. ein thermischer Sensor realisierbar; Redundanz ist nicht vorgesehen. Schließlich weist die Vorrichtung gemäß der RU 2153712 C1 noch den Nachteil auf, dass alle beheizten Thermoelemente durch einen gemeinsamen Heizdraht mit in Serie geschalteten Heizzonen beheizt werden. Wird der Draht beschädigt und der Stromfluß unterbrochen, fällt die gesamte Messvorrichtung aus.

Dokument US4785665 offenbart eine Vorrichtung zur Füllstandsmessung, mit einer Mehrzahl von länglichen, voneinander beabstandeten Messrohren, wobei jedes Messrohr eine Anzahl von in Längsrichtung verteilt angeordneten Thermoelementen aufweist, und wobei einem an einem ersten Messrohr angeordneten, durch ein Heizelement beheizten und als Primärsignalgeber wirksamen Thermoelement ein als Referenzsignalgeber wirksames unbeheiztes Thermoelement signalseitig zugeordnet ist, welches an einem von dem ersten Messrohr verschiedenen Messrohr angeordnet ist.

Der Erfindung liegt daher die Aufgabe zugrunde, eine Vorrichtung zur Füllstandsmessung der eingangs genannten Art anzugeben, die bei einfach gehaltener Bauart und bei hoher Ausfallsicherheit eine besonders präzise und zuverlässige Messung der Füllstandshöhe ermöglicht.

Diese Aufgabe wird erfindungsgemäß gelöst durch eine Vorrichtung gemäβ Anspruchs 1.

Die Erfindung geht von der Überlegung aus, dass es zwar stets möglich wäre, Redundanz und Ausfallsicherheit durch die gleichzeitige Verwendung mehrerer der bereits bekannten Messvorrichtungen zu erzielen. Dies würde die oben beschriebenen Nachteile der einzelnen Messvorrichtungen aber nur zum Teil kompensieren, insbesondere was die erreichbare Messgenauigkeit angeht. Stattdessen sollte konsequent die Erkenntnis umgesetzt werden, dass gerade bei der Kühlflüssigkeit in einem Reaktordruckbehälter, aber auch bei vielen anderen Systemen die Variation der Flüssigkeitstemperatur in lateraler, das heißt horizontaler Richtung im Allgemeinen weniger ins Gewicht fällt als in geodätisch vertikaler Richtung. Das heißt, die lokalen Temperaturgradienten innerhalb der Flüssigkeit, die durch die äußeren (Rand-) Bedingungen und die Fluiddynamik sowie den Wärmetransport innerhalb der Flüssigkeit vorgegeben sind oder erzeugt werden, fallen in Richtung der Höhenausdehnung zumeist stärker ins Gewicht als in einer Richtung senkrecht dazu und müssen daher bei der Ermittlung der Füllstandshöhe aus den Temperaturdaten auch stärker berücksichtigt werden. Es ist daher ohne weiteres und ohne einen Verlust an Informationsgehalt oder Messgenauigkeit möglich, die einzelnen Messpunkte in lateraler, das heißt horizontaler Richtung voneinander zu separieren bzw. zu verteilen und die dadurch gewonnen Freiheitsgrade zur Realisierung eines besonders zuverlässigen und genauen Messprinzips auszunutzen.

Im vorliegenden Fall wird dieses Konzept durch mehrere im Wesentlichen parallel zueinander verlaufende und senkrecht in die Flüssigkeit eintauchende Messrohre verwirklicht, von denen jedes eine Anzahl von Thermoelementen trägt. Im Gegensatz zu einer simplen Parallelmontage gleichartiger Messrohre vom bereits bekannten Typ, deren Messsignale getrennt voneinander aufbereitet und in (redundante) Füllstandsinformationen umgesetzt werden, ist es nun aber vorgesehen, die signalseitig unmittelbar zusammengehörigen und einander zugeordneten Primärsignalgeber und Referenzsignalgeber auf verschiedene, räumlich separierte Messrohre zu verteilen.

Mit anderen Worten: Einem auf einer bestimmten Höhe angeordneten beheizten Thermoelement, das an oder innerhalb eines ersten Messrohres montiert ist und dabei als primärer Signalgeber fungiert, also auf vom Aggregatzustand des umgebenden Mediums abhängige Änderungen im Wärmeübergangsverhalten reagiert, ist ein an oder innerhalb eines zweiten Messrohres angeordnetes unbeheiztes Thermoelement als Referenzsignalgeber zugeordnet, wobei das erste und das zweite Messrohr durch einen Zwischenraum voneinander beabstandet sind. Dabei werden die vom Referenz-Thermoelement gelieferten Daten in einer Auswerteeinheit gemeinsam mit den Daten des Primär-Thermoelementes verarbeitet, wobei anhand der Referenzsignale durch äußere Umstände bedingte zeitliche Fluktuationen oder Veränderungen der Kühlmitteltemperatur berücksichtigt werden. Beispielsweise kann als besonders einfache Maßnahme zur Berücksichtigung der Umgebungstemperaturen ein Differenzsignal aus Primär- und Referenzsignal gebildet werden.

Vorzugsweise befinden sich das beheizte und das ihm signalzeitig zugeordnete unbeheizte Thermoelement auf der gleichen Höhe, wodurch insbesondere bei Vorliegen von Temperaturgradienten über die Kühlmittelhöhe (das heißt in vertikaler Richtung) eine besonders präzise Messung und verläßliche Auswertung der Daten gewährleistet ist. Vorzugsweise werden für alle relevanten Höhen derartige Paare von auf oder in verschiedenen Messrohren montierten, beheizten und unbeheizten Thermoelementen gebildet. Durch die räumliche Trennung und Anordnung an oder in getrennten Messrohren wird eine unerwünschte wechselseitige Beeinflussung der Primär- und Referenzsignalgeber soweit wie möglich unterdrückt, da eine direkte Werbeübertragung vom beheizten zum unbeheizten Thermoelement, etwa durch Wärmeleitung innerhalb des Messrohrgehäuses, ausgeschlossen ist.

Die Füllstands-Messvorrichtung umfasst mindestens drei Messrohre, wobei ein an einem ersten Messrohr angeordnetes unbeheiztes Thermoelement als Referenzsignalgeber für mindestens zwei beheizte Thermoelemente wirksam ist, und wobei die mindestens zwei beheizten Thermoelemente an von dem ersten Messrohr verschiedenen und vorzugsweise auch voneinander verschiedenen Messrohren angeordnet sind. Vorzugsweise befinden sich dabei alle signalseitig einander zugeordneten Thermoelemente jeweils auf der gleichen Höhe. Durch die beiden beheizten Thermoelemente wird somit eine Redundanz hinsichtlich der Primärsignale erreicht. Da die Funktion der unbeheizten Thermoelemente wegen der Abwesenheit beheizungsbedingter Fehler- oder Störquellen weniger störfallgefährdet ist, reicht es im Allgemeinen aus, ein einziges unbeheiztes Thermoelement als Refernzsignalgeber für mehrere beheizte Thermoelemente zu verwenden. Das unbeheizte Thermoelement ist dann also Bestandteil mehrerer Paarungen von zur gemeinsamen Signalauswertung zusammen geschalteten Signalgebern. Selbstverständlich kann der Fachmann im Rahmen des erläuterten Konzeptes auch noch andere ihm geläufige Redundanzstrukturen verwirklichen, z.B. dreifache Redundanz der Primärsignale oder auch eine Redundanz hinsichtlich der Referenzsignale.

In weiterer vorteilhafter Ausgestaltung ist es vorgesehen, dass ein Messrohr, vorzugsweise jedoch alle Messrohre, entweder nur beheizte oder nur unbeheizte Thermoelemente umfasst/umfassen. Insbesondere ist eine Variante mit drei Messrohren zweckmäßig, von denen eines nur unbeheizte und die beiden anderen nur beheizte Thermoelemente aufweisen, wobei jeweils einem unbeheizten Thermoelement mindestens ein auf gleicher Höhe liegendes beheiztes Thermoelement signalseitig zugeordnet ist. Somit ist es möglich, alle unbeheizten Referenzthermoelemente in einem Messrohr zu montieren, in denen kein störender Heizdraht oder sonstige Heizelemente angeordnet sind. Neben einer unerwünschten Erwärmung der unbeheizten Thermoelemente infolge von Wärmeleitung innerhalb des Messrohres wird auch eine "konvektive" Wechselwirkung vermieden, die immer dann bestehen könnte, wenn bei einem einzigen Messrohr ein unbeheiztes Thermoelement oberhalb eines anderen, beheizten Thermoelementes angeordnet ist. Das beheizte Thermoelement könnte dann nämlich das es umgebende Medium erwärmen, wodurch dieses entlang der Außenwand des Rohres nach oben aufsteigen und an dem unbeheizten Thermoelement vorbeiströmen würde. Die Anordnung und Konstellation der Thermoelemente nach dem nunmehr vorgesehenen Konzept vermeidet derartige Probleme und ermöglicht daher eine besonders genaue und ungestörte Messung der Referenztemperatur(en).

Da im zuletzt geschilderten Fall die Messrohre mit den beheizten Thermoelementen keine unbeheizten Thermoelemente aufnehmen müssen, steht dort zusätzlicher Einbauraum zur Verfügung, der gegebenenfalls mit weiteren Messpositionen bestückt werden kann, so dass sich eine besonders hohe Sensordichte, sprich eine hohe Ortsauflösung ergibt. Ein alternatives Auslegungsziel kann darin bestehen, die beheizten Thermoelemente bei eher niedriger "Dichte", das heißt Anzahl pro Längeneinheit, auf mehrere Messrohre zu verteilen, so dass sich auch die beheizten Thermoelemente innerhalb eines Messrohres möglichst wenig gegenseitig, etwa durch Wärmeleitung im Messrohrgehäuse oder im Rohrinneren, beeinflussen. Vorteilhafterweise ist allen beheizten Thermoelementen eines Messrohres ein gemeinsamer Heizdraht zugeordnet. Dabei kann es sich um einen an allen zu beheizenden Thermoelementen vorbeigeführten Draht handeln, der in Reihe geschaltete Heizzonen mit vergleichsweise hohem elektrischen Widerstand aufweist, die jeweils in der Nähe des zu beheizenden Thermoelementes positioniert sind. In einer vorteilhaften Alternativausführung ist jedem der beheizten Thermoelemente eines Messrohres ein eigenes Heizelement zugeordnet. Bei dieser Variante ist durch die individuelle Regelung des Heizstromes bzw. der Heizspannung eine besonders exakte und bedarfsgerechte Beheizung jedes einzelnen Thermoelementes möglich. Ein Thermoelement kann dann wahlweise auch als beheiztes oder unbeheiztes Thermoelement eingesetzt werden.

Vorzugsweise sind die Messsonden des Füllstands- Messgerätes von einem gemeinsamen Schutzgehäuse umgeben, welches eine Anzahl von Durchtrittsöffnungen zum Ausgleich des Flüssigkeitspegels mit von der Umgebung aufweist. Das Schutzgehäuse schützt die Messrohre nicht nur vor äußeren mechanischen Einwirkungen, sondern verhindert insbesondere beim Einsatz der Messvorrichtung in einem Reaktordruckbehälter eines Kernkraftwerkes, dass die im Primärkreislauf zirkulierende Kühlflüssigkeit mit vergleichsweise hoher Strömungsgeschwindigkeit auf die Messrohre auftrifft, wodurch die Messergebnisse verfälscht werden könnten. Vielmehr wird die Flüssigkeitsströmung in der unmittelbaren Umgebung der Messrohre durch das Schutzgehäuse beruhigt, wobei die Durchtrittsöffnungen jedoch derart dimensioniert sind, dass sich der Flüssigkeitspegel im Inneren des Schutzgehäuses rasch an einen sich verändernden äußeren Flüssigkeitspegel angleichen kann. Außerdem wird bei Zwei-Phasen-Gemischen die Trennung in den flüssigen und den gasförmigen Anteil gefördert, wodurch sich im Inneren des Schutzgehäuses oder der Schutzröhre ein effektiver Flüssigkeitsspiegel einstellt, dessen Höhe dann gemessen wird.

Wie bereits eingangs erwähnt, ist die Vorrichtung zur Füllstandsüberwachung vorteilhafterweise Bestandteil der Sicherheitseinrichtungen in einem Kernreaktor, insbesondere in einem Druckwasserreaktor. Selbstverständlich sind auch andere Einsatzgebiete, bei denen es auf eine einfache, präzise und robuste Füllstandsmessung auch unter widrigen Umgebungsbedingungen ankommt, denkbar.

Die mit der Erfindung erzielten Vorteile bestehen insbesondere darin, dass durch die räumliche Trennung unterschiedlicher, signalseitig zueinander komplementärer Sensortypen und durch ihre Verteilung auf eine Mehrzahl von räumlich beabstandeten Messrohren eine für Präzisionsmessungen besonders geeignete Vorrichtung zur Füllstandsmessung verwirklicht wird, die gegenüber störenden, äußeren und inneren Einflüssen weitgehend resistent ist. Zudem lassen sich bei dem neuen Design alle wesentlichen Komponenten der Vorrichtung ohne großen Mehraufwand redundant auslegen, was gerade bei sicherheitskritischen Einsatzzwecken, z.B. bei einer kerntechnischen Anlage, besonders vorteilhaft ist. Da es möglich ist, jedem als Primärsignalgeber wirksamen beheizten Thermoelement ein auf gleicher Höhe liegendes unbeheiztes Referenz-Thermoelement zuzuordnen, ist unabhängig von Umgebungseinflüssen jederzeit eine besonders präzise Aussage über den Füllstand möglich.

Ein Ausführungsbeispiel der Erfindung wird anhand einer Zeichnung näher erläutert. Darin zeigen:
- Fig. 1: eine schematische, teilweise geschnittene Seitenansicht einer Vorrichtung zur Füllstandsmessung,
- Fig. 2: einen Querschnitt durch die Vorrichtung gemäß Fig. 1, und
- Fig. 3: ein das Messprinzip veranschaulichendes Diagramm, in dem die von einem Primärsignalgeber und einem ihm zugeordneten Referenzsi- gnalgeber ermittelten Daten sowie ein zugehöriges Differenzsignal als Funktion der Zeit dargestellt sind.

Gleiche Teile sind in allen Figuren mit denselben Bezugszeichen versehen.

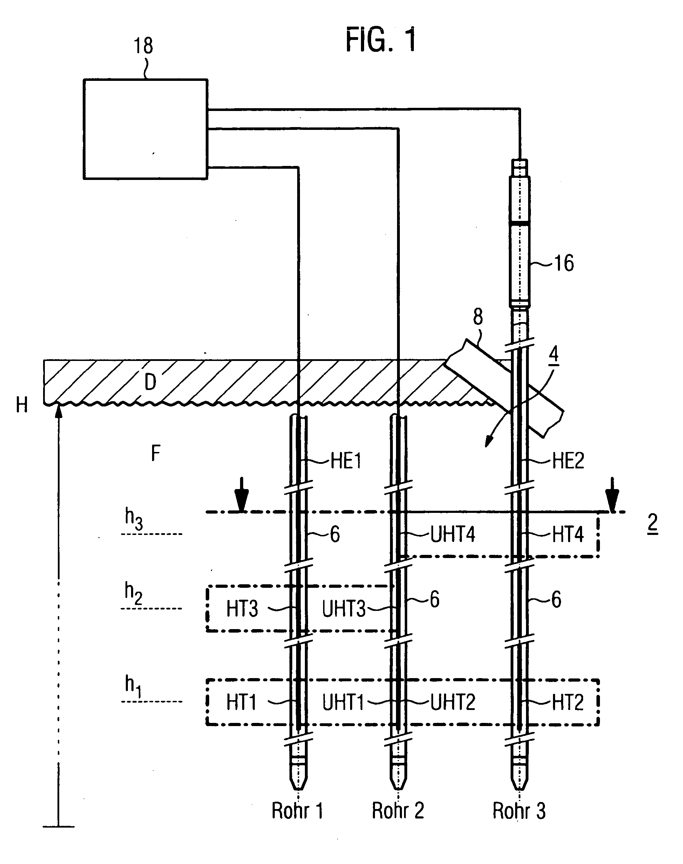

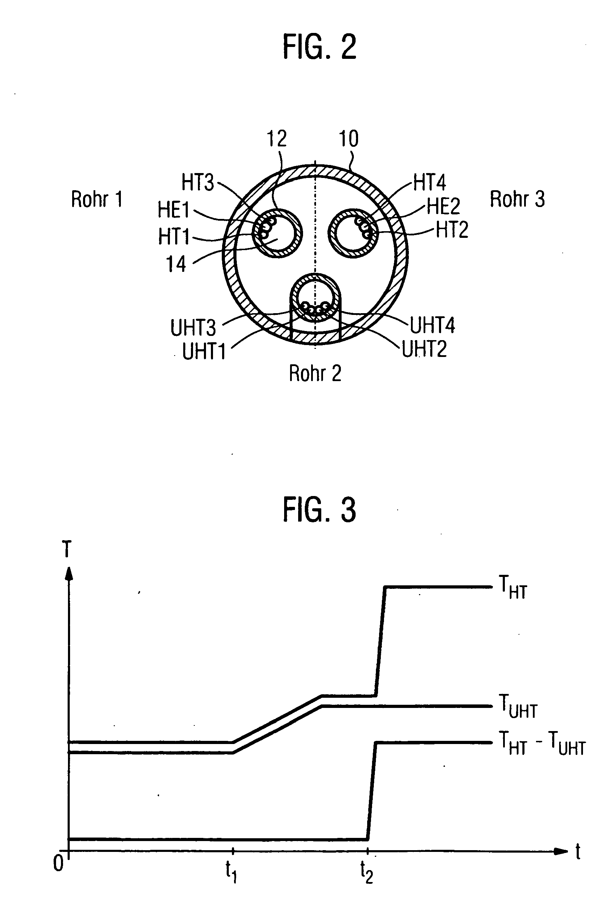

Die in Fig. 1 in einer zum Teil geschnittenen Seitenansicht und in Fig. 2 im Querschnitt dargestellte Vorrichtung 2 zur Füllstandsmessung dient dazu, den Pegelstand der Kühlflüssigkeit F im Reaktordruckbehälter 4 eines hier nicht näher dargestellten Druckwasserreaktors zu überwachen. Die Vorrichtung 2 umfasst drei jeweils in der Art einer Messlanze gestaltete längliche Messrohre 6, die bei der Montage der Messvorrichtung 2 von oben durch dafür vorgesehene Ausnehmungen in der Deckelplatte 8 ins Innere des Reaktordruckbehälters 4 eingeführt werden, und die beim Betrieb des Kernreaktors zumindest teilweise in die Kühlflüssigkeit F eintauchen. Die Pegelhöhe oder Füllstandshöhe über dem Grund des Behälters ist in Fig. 1 mit H bezeichnet, wobei selbstverständlich auch andere Bezugsniveaus verwendet werden könnten. Oberhalb des Flüssigkeitsspiegels befindet sich dampfförmiges Kühlmedium, kurz: Dampf D.

Die drei Messrohre 6 der Füllstandssonde 2 sind jeweils vertikal ausgerichtet und voneinander beabstandet im Reaktordruckbehälter 4 montiert; sie liegen also parallel zueinander, ohne sich jedoch zu berühren. Wie im Querschnitt nach Fig. 2 ersichtlich ist, sind die drei Messrohre 6 ungefähr an den Eckpunkten eines gleichseitigen Dreiecks angeordnet, das heißt der Abstand zwischen je zwei Messrohren 6 ist für alle Paarungen gleich groß und beträgt typischerweise 0,5 cm bis 1,5 cm. Die drei Rohre 6 sind von einem zylindrischen Schutzrohr 10 umschlossen, das zumindest im unteren und oberen Randbereich eine Anzahl von hier nicht näher dargestellten Durchtritts- bzw. Entlüftungsöffnungen aufweist, so dass sich der Pegelstand der Kühlflüssigkeit F im Inneren des Schutzrohres 10 stets ohne äußeres Zutun und ohne wesentliche zeitliche Verzögerung an den äußeren Pegelstand im Reaktordruckbehälter 4 angleichen kann. Etwa vorhandene Strömungsturbulenzen oder dergleichen werden dabei beruhigt, so dass die innerhalb des Schutzrohres 10 angeordneten Messrohre 6 vor derartigen Einflüssen geschützt sind. In der Seitenansicht gemäß Fig. 1 ist das Schutzrohr 10 der Übersichtlichkeit halber nicht eingezeichnet.

Jedes der drei Messrohre 6 weist ein am unteren Ende wasserdicht verschlossenes zylindrisches Gehäuse 12 mit einem Innendurchmesser von ca. 1 cm und mit einer Wandstärke von ca. 2 mm auf, das aus einem wasserundurchläßigen, druckstabilen, korrosionsbeständigen und gut wärmeleitfähigen Material besteht: Im Ausführungsbeispiel kommt zu diesem Zweck ein Edelstahl zum Einsatz.

Im Innenraum 14 jedes Messrohres 6 ist eine Anzahl von Thermoelementen angeordnet. Das mit "Tube 1" bezeichnete Messrohr enthält zwei beheizte Thermoelemente (heated thermocouples), nämlich das auf einer Höhe h₁ befindliche beheizte Thermoelement HT1 und das darüberliegend auf einer Höhe h₂ angeordnete beheizte Thermoelement HT3. Das mit "Tube 3" bezeichnete Messrohr enthält in seinem Innenraum 14 ebenfalls zwei beheizte Thermoelemente, nämlich das beheizte Thermoelement HT2 auf der Höhe h₁ und darüberliegend auf der Höhe h₃ das beheizte Thermoelement HT4. Es gilt h₃ > h₂ > h₁, wobei die Abstände zwischen den Niveaus im Ausführungsbeispiel gleich groß sind. Weiterhin sind im Innenraum 14 von Tube 1 und Tube 3 Heizelemente (heating elements), nämlich HE1 in Tube 1 und HE2 in Tube 3, angeordnet. Die Heizelemente sind jeweils als Heizdrähte ausgebildet, die an den zu beheizenden Thermoelementen HT1 und HT3 bzw. HT2 und HT4 vorbeigeführt sind, wobei die Heizdrähte in der Nähe dieser Thermoelemente positionierte Heizzonen aufweisen, mittels derer die Umgebung beheizt wird. Sowohl die Heizelemente HE1 bzw. HE2 als auch die Thermoelemente HT1 und HT3 bzw. HT2 und HT4 liegen direkt an der Innenwand des gut wärmeleitfähigen Gehäuses 12 an, wobei die Heizelemente jeweils an beiden Seiten von den Thermoelementen "eingerahmt" oder flankiert werden (siehe Fig. 2). Die Heizdrähte sowie die für die Stromversorgung bzw. Signalübermittlung der Thermoelemente erforderlichen Signal- und Versorgungsleitungen werden im Innenraum 14 des jeweiligen Messrohres 6 bis zu einem außerhalb der Deckelplatte 8 des Reaktordruckbehälters 4 befindlichen Anschlußadapter 16 geführt. Über die beiden Anschlußadapter 16 sind die Thermoelemente HT1 bis HT4 signalseitig mit einer hier nur schematisch angedeuteten elektronischen Auswerteeinheit 18 verbunden.

Das mit "Tube 2" bezeichnete Messrohr 6 enthält in seinem Innenraum 14 vier unbeheizte Thermoelemente (unheated thermocouples), von denen zwei auf der Höhe h₁ angeordnet sind (UHT1 und UHT2), und je eines auf der Höhe h₂ und bei h₃ (UHT3 bzw. UHT4). Auch die unbeheizten Thermoelemente UHT1 bis UHT4 haben jeweils direkten Kontakt mit der Innenwand des gut wärmeleitfähigen Gehäuses 12 und sind signalseitig über einen hier nicht näher dargestellten Anschlußadapter mit der extern stationierten Auswerteeinheit 18 verbunden. Es ist jedoch keinerlei Heizeinrichtung oder dergleichen in Tube 2 vorgesehen.

Zum Zwecke der Signalauswertung und Füllstandsermittlung werden je ein beheiztes Thermoelement (Primärsignalgeber) und ein auf gleicher Höhe - innerhalb eines anderen Messrohres - befindliches unbeheiztes Thermoelement (Referenzsignalgeber) zusammengefasst. Bei der Signalverarbeitung in der Auswerteeinheit werden also die vier Paare (HT1, UHT1) bis (HT4, UHT4) gebildet, was in Fig. 1 schematisch durch die die zueinander komplementären Thermoelemente einrahmenden punktierten Linien angedeutet ist.

Die Wirkungsweise der beheizten und unbeheizten Thermoelemente und ihre Verwendung zur Füllstandsmessung werden exemplarisch anhand des Signalgeberpaares (HT4, UHT4) beschrieben. Zunächst wird von einem regulären Reaktorbetrieb mit konstanter Füllstandshöhe H im Reaktordruckbehälter 4 und mit intaktem Kühlkreislauf, das heißt zeitlich konstanter Kühlmitteltemperatur ausgegangen. Solange der Pegelstand der Kühlflüssigkeit F oberhalb der Einbauhöhe des beheizten Thermoelementes HT4 liegt (H > h₃), so wird die vom Heizelement HE2 in der Umgebung des Thermoelementes HT4 abgegebene Wärme vergleichsweise effektiv durch die Gehäusewand des Gehäuses 12 abgeführt und auf die Kühlflüssigkeit F übertragen. Da ständig neue, das heißt kalte Kühlflüssigkeit F in den Reaktordruckbehälter nachströmt (offenes System im Sinne der Thermodynamik), steigt die Wandtemperatur in der Umgebung des Thermoelementes HT4 gegenüber dem unbeheizten Fall, repräsentiert durch das unbeheizte Thermoelement UHT4, kaum an. Der aus den Thermospannungen der einander zugeordneten Thermoelemente jeweils abgeleitete Temperaturverlauf (Temperaturen T_{HT} und T_{UHT}) am Ort der Thermoelemente ist als Funktion der Zeit exemplarisch in Fig. 3 dargestellt. Bis zum Zeitpunkt t₁ entspricht der Verlauf dem soeben geschilderten Szenario. Ebenfalls in das Diagramm eingetragen ist die Temperaturdifferenz T_{HT}-T_{UHT}, die bis zum Zeitpunkt t₁ in der Nähe von Null liegt.

Zum Zeitpunkt t₁ wird nun ein Reaktorstörfall angenommen, der bei zunächst konstant bleibender Füllstandshöhe H der Kühlflüssigkeit F im Reaktordruckbehälter 4 zu einem (globalen) Anstieg der Kühlmitteltemperatur führt. Dadurch steigt die Temperatur an der Außenwand aller drei Messrohre 6 an. Insbesondere steigt die von den Thermoelementen UHT4 und HT4 erfasste Temperatur in gleichem Maße an. Gegebenenfalls vorhandene Effekte einer Temperaturschichtung, also Temperaturgradienten in vertikaler Richtung, spielen keine Rolle, da die beiden einander zugeordneten Messposition auf gleicher Höhe, nämlich h₃, liegen. Die Temperaturdifferenz T_{HT}-T_{UHT} bleibt damit im Zeitintervall t₁ bis t₂ annähernd Null.

Dies ändert sich erst zum Zeitpunkt t₂, wenn - wie hier angenommen wird - die Füllstandshöhe H der Kühlflüssigkeit F unter das Niveau h₃ fällt (H < h₃). Zwar ändern sich die Umgebungstemperaturen bei den beiden Messposition erst einmal nicht wesentlich, da der oberhalb des Flüssigkeitsspiegels befindliche Dampf D ähnliche Temperaturen wie die Kühlflüssigkeit F aufweist. Jedoch verschlechtern sich schlagartig die Wärmeübergangseigenschaften in Bezug auf den Wärmeübergang am Ort des beheizten Thermoelementes HT4. Die durch das Heizelement HE2 freigesetzte Wärmemenge kann dann nicht mehr im gleichen Maße wie zuvor in die Umgebung abtransportiert werden, so dass die vom Thermoelement HT4 gemessene Temperatur T_{HT} drastisch ansteigt, siehe Fig. 3. Somit ist das plötzliche Ansteigen der Temperaturdifferenz zwischen beheiztem und unbeheiztem Thermoelement ab dem Zeitpunkt t₂ ein sicherer Indikator für das unter die Höhe h₃ abgesunkene Füllstandsniveau. Analoge Überlegungen gelten bezüglich der Niveaus h₂ und h₁.

Da das Absinken der Kühlflüssigkeit F unter das Niveau h₁ als besonders kritisch angesehen wird, ist die Füllstandsüberwachung bezüglich dieses Niveaus besonders abgesichert: Mit den beiden Sensorpaaren (HT1, UHT1) und (HT2, UHT2) sind zwei voneinander unabhängige, redundante Messungen vorgesehen. In einer alternativen, hier nicht gezeigten Ausführungsform, liegt Redundanz lediglich bezüglich der beiden beheizten Thermoelemente HT1 und HT2 vor, während nur ein einziges unbeheiztes Thermoelement, also entweder UHT1 oder UHT2, als Referenzsignalgeber für diese beiden beheizten Thermoelemente vorgesehen ist.

### Bezugszeichenliste

- 2: Messvorrichtung / Füllstandssonde
- 4: Reaktordruckbehälter
- 6: Messrohr
- 8: Deckelplatte
- 10: Schutzrohr
- 12: Gehäuse
- 14: Innenraum
- 16: Anschlußadapter
- 18: Auswerteeinheit

- HT: beheiztes Thermoelement
- UHT: unbeheiztes Thermoelement
- HE: Heizelement

- D: Dampf
- K: Kühlflüssigkeit
- H: Füllstandshöhe

## Patentansprüche

1. Vorrichtung (2) zur Füllstandsmessung in einem Flüssigkeitsbehälter, insbesondere in einem Reaktorbehälter (4) einer kerntechnischen Anlage, mit mindestens drei länglichen, voneinander beabstandeten Messrohren (6), wobei jedes Messrohr (6) eine Anzahl von in Längsrichtung verteilt angeordneten Thermoelementen (HT, UHT) aufweist, und wobei einem an einem ersten Messrohr (6) angeordneten, durch ein Heizelement (HE) beheizten und als Primärsignalgeber wirksamen Thermoelement (HT) ein als Referenzsignalgeber wirksames unbeheiztes Thermoelement (UHT) signalseitig zugeordnet ist, welches an einem von dem ersten Messrohr (6) verschiedenen Messrohr (6) angeordnet ist, **dadurch gekennzeichnet, dass** ein an einem ersten Messrohr (6) angeordnetes unbeheiztes Thermoelement (UHT) als Referenzsignalgeber für mindestens zwei beheizte Thermoelemente (HT) wirksam ist, wobei die mindestens zwei beheizten Thermoelementen (HT) an von dem ersten Messrohr (6) verschiedenen Messrohren (6) angeordnet sind.

2. Vorrichtung (2) nach Anspruch 1, mit einer Mehrzahl von einander paarweise zugeordneten beheizten Thermoelementen (HT) und unbeheizten Thermoelementen (UHT), wobei jeweils einem beheizten Thermoelement (HT) ein unbeheiztes Thermoelement (UHT) signalseitig zugeordnet ist, und wobei die beiden Thermoelemente (HT, UHT) eines derartigen Paares jeweils an verschiedenen Messrohren (6) angeordnet sind.

3. Vorrichtung (2) nach Anspruch 1 oder 2, bei der die mindestens zwei beheizten Thermoelemente (HT) an voneinander verschiedenen Messrohren (6) angeordnet sind.

4. Vorrichtung (2) nach einem der Ansprüche 1 bis 3, bei der die beiden Thermoelemente (HT, UHT) mindestens eines Primärsignal-Referenzsignal-Paares auf gleicher Höhe angeordnet sind.

5. Vorrichtung (2) nach einem der Ansprüche 1 bis 4, bei der jeweils die beiden Thermoelemente (HT, UHT) aller Primärsignal-Referenzsignal-Paare auf gleicher Höhe angeordnet sind.

6. Vorrichtung (2) nach einem der Ansprüche 1 bis 5, bei der ein Messrohr (6), vorzugsweise alle Messrohre (6), entweder nur beheizte Thermoelemente (HT) oder nur unbeheizte Thermoelemente (UHT) umfasst / umfassen.

7. Vorrichtung (2) nach einem der Ansprüche 1 bis 6 mit drei Messrohren (6), von denen eines nur unbeheizte Thermoelemente (UHT) und die beiden anderen nur beheizte Thermoelemente (HT) aufweisen, wobei jeweils einem unbeheizten Thermoelement (UHT) mindestens ein auf gleicher Höhe liegendes beheiztes Thermoelement (HT) signalseitig zugeordnet ist.

8. Vorrichtung (2) nach einem der Ansprüche 1 bis 7, bei der allen beheizten Thermoelementen (HT) eines Messrohres (6) ein gemeinsamer Heizdraht zugeordnet ist.

9. Vorrichtung (2) nach einem der Ansprüche 1 bis 7, bei der jedem der beheizten Thermoelemente (HT) eines Messrohres ein eigenes Heizelement (HE) zugeordnet ist.

10. Vorrichtung (2) nach einem der Ansprüche 1 bis 9, bei der die Messrohre (6) von einem gemeinsamen Schutzgehäuse oder Schutzrohr (10) umgeben sind, welches eine Anzahl von Durchtrittsöffnungen zum Ausgleich des Flüssigkeitspegels mit der Umgebung aufweist.

11. Kemtechnische Anlage, insbesondere Druckwasserreaktor, mit einer Vorrichtung (2) zur Füllstandsüberwachung nach einem der Ansprüche 1 bis 10.

## Claims

1. A device (2) for measuring the filling level in a liquid container, in particular in a reactor vessel (4) of a nuclear power plant, having at least three oblong measuring tubes (6) spaced from each other, each measuring tube (6) including a number of thermocouples (HT, UHT) distributedly arranged in longitudinal direction and an unheated thermocouple (UHT) arranged on a measuring tube (6) other than the first measuring tube (6) and acting as a reference signal transmitter being associated, on the signal side, with a thermocouple (HT) arranged on a first measuring tube (6), heated by a heating element (HE) and acting as a primary signal transmitter, **characterized in that** an unheated thermocouple (UHT) arranged on a first measuring tube (6) acts as reference signal transmitter for at least two heated thermocouples (HT), the at least two heated thermocouples (HT) being arranged on measuring tubes (6) other than the first measuring tube (6).

2. The device (2) of claim 1, having a plurality of heated thermocouples (HT) and unheated thermocouples (UHT), associated with each other in pairs, one unheated thermocouple (UHT) being associated in each case, on the signal side, with one heated thermocouple (HT), and the two thermocouples (HT, UHT) of each such pair being arranged on different measuring tubes (6).

3. The device (2) of claim 1 or 2, wherein the at least two heated thermocouples (HT) are arranged on different measuring tubes (6).

4. The device (2) of any of claims 1 to 3, wherein the two thermocouples (HT, UHT) of at least one primary-signal/reference-signal pair are arranged on the same level.

5. The device (2) of any of claims 1 to 4, wherein the two thermocouples (HT, UHT) of each of all primary-signal/reference-signal pairs are arranged on the same level.

6. The device (2) of any of claims 1 to 5, wherein one measuring tube (6), preferably all measuring tubes (6), comprise(s) either exclusively heated thermocouples (HT) or exclusively unheated thermocouples (UHT).

7. The device (2) of any of claims 1 to 6, having three measuring tubes (6), one of which includes exclusively unheated thermocouples (UHT) and the two others of which include exclusively heated thermocouples (HT), at least one heated thermocouple (HT) situated on the same level being associated in each case, on the signal side, with one unheated thermocouple (UHT).

8. The device (2) of any of claims 1 to 7, wherein a common heating wire is associated with all heated thermocouples (HT) of a measuring tube (6).

9. The device (2) of any of claims 1 to 7, wherein a heating element (HE) of its own is associated with each of the heated thermocouples (HT) of a measuring tube (6).

10. The device (2) of any of claims 1 to 9, wherein the measuring tubes (6) are enclosed by a common protective housing or protective tube (10), which includes a number of penetration openings for equalizing the liquid level with the environment.

11. A nuclear power plant, in particular a pressurized-water reactor, having a device (2) for monitoring a filling level according to any of claims 1 to 10.

## Revendications

1. Dispositif (2) pour mesurer le niveau de remplissage dans un réservoir à liquide, en particulier dans une cuve de réacteur (4) d'une installation nucléaire, ayant au moins trois tubes de mesurage (6) oblongs espacés l'un de l'autre, chaque tube de mesurage (6) comprenant un nombre de thermocouples (HT, UHT) ménagés de façon distribuée en direction longitudinale, et un thermocouple non chauffé (UHT), ménagé sur un tube de mesurage (6) autre que le premier tube de mesurage (6) et agissant comme transmetteur de signal de référence, étant affecté, du côté signal, à un thermocouple (HT) ménagé sur un premier tube de mesurage (6), chauffé par un élément de chauffage (HE) et agissant comme transmetteur de signal primaire, **caractérisé en ce qu'**un thermocouple non chauffé (UHT) ménagé sur un premier tube de mesurage (6) agit comme transmetteur de signal de référence pour au moins deux thermocouples chauffés (HT), les, au moins deux, thermocouples chauffés (HT) étant ménagés sur des tubes de mesurage (6) autres que le premier tube de mesurage (6).

2. Dispositif (2) selon la revendication 1, ayant un pluralité de thermocouples chauffés (HT) et de thermocouples non chauffés (UHT), affectés l'un à l'autre par paires, un thermocouple non chauffé (UHT) étant affecté à chaque fois, du côté signal, à un thermocouple chauffé (HT), et les deux thermocouples (HT, UHT) de chacun de ces paires étant ménagés sur des tubes de mesurage (6) différents.

3. Dispositif (2) selon la revendication 1 ou 2, dans lequel les au moins deux thermocouples chauffés (HT) sont ménagés sur des tubes de mesurage (6) différents.

4. Dispositif (2) selon l'une quelconque des revendications 1 à 3, dans lequel les deux thermocouples (HT, UHT) du, au moins un, paire de signal primaire/signal de référence sont ménagés au même niveau.

5. Dispositif (2) selon l'une quelconque des revendications 1 à 4, dans lequel les deux thermocouples (HT, UHT) de chacun de tous les paires de signal primaire/signal de référence sont ménagés au même niveau.

6. Dispositif (2) selon l'une quelconque des revendications 1 à 5, dans lequel un tube de mesurage (6), de préférence tous les tubes de mesurage (6), comprend/comprennent ou exclusivement des thermocouples chauffés (HT) ou exclusivement des thermocouples non chauffés (UHT).

7. Dispositif (2) selon l'une quelconque des revendications 1 à 6, ayant trois tubes de mesurage (6), l'un desquels comprend exclusivement des thermocouples non chauffés (UHT) et les deux autres desquels comprennent exclusivement des thermocouples chauffés (HT), au moins un thermocouple chauffé (HT) se trouvant au même niveau étant affecté à chaque fois, du côté signal, à un thermocouple non chauffé (UHT).

8. Dispositif (2) selon l'une quelconque des revendications 1 à 7, dans lequel un fil chauffant commun est affecté à tous les thermocouples chauffés (HT) d'un tube de mesurage (6).

9. Dispositif (2) selon l'une quelconque des revendications 1 à 7, dans lequel un élément de chauffage (HE) séparé est affecté à chacun des thermocouples chauffés (HT) d'un tube de mesurage (6).

10. Dispositif (2) selon l'une quelconque des revendications 1 à 9, dans lequel les tubes de mesurage (6) sont entourés par un boîtier de protection ou un tube de protection (10) commun, qui comprend un nombre d'ouvertures de pénétration pour équilibrer le niveau du liquide avec l'environnement.

11. Installation nucléaire, en particulier un réacteur à eau sous pression, ayant un dispositif (2) pour surveiller un niveau de remplissage, selon l'une quelconque des revendications 1 à 10.
